# EUROPEAN PATENT SPECIFICATION

(11) **EP 1 778 768 B1**
(45) Date of publication and mention of the grant of the patent: **28.12.2011**
(21) Application number: 05755740.7
(22) Date of filing: 21.06.2005
(51) Int. Cl.: C08J 5/12, C08L 83/04

(54) **INTEGRALLY MOLDED BODY OF SILICONE RESIN AND SILICONE RUBBER, METHOD OF MANUFACTURE, AND CURABLE SILICONE RESIN COMPOSITION**
EINSTÜCKIG AUSGEBILDETER FORMKÖRPER AUS SILIKONHARZ UND SILIKONKAUTSCHUK, HERSTELLUNGSVERFAHREN UND HÄRTBARE SILIKONHARZZUSAMMENSETZUNG
CORPS MOULE SOLIDAIREMENT EN RESINE SILICONE ET CAOUTCHOUC SILICONE, PROCEDE DE PRODUCTION ET COMPOSITION DE RESINE SILICONE DURCISSABLE

(30) Priority: 23.06.2004 JP 2004185073
(43) Date of publication of application: 02.05.2007
(73) Proprietor: Dow Corning Toray Co., Ltd., Tokyo 100-0005 (JP)
(72) Inventor: NAKASHIMA, Hisataka, Shizuoka-shi, Shizuoka 422-8002 (JP); KOBAYASHI, Hideki, Ichihara-shi, Chiba 290-0075 (JP)
(74) Representative: Russell, Lindsey
(86) International application number: PCT/JP2005/011864
(87) International publication number: WO 2006/001458

(56) References cited:
- US-A- 5 645 941
- US-A1- 2002 028 335

## Description

### Technical Field

The present invention relates to an integrally molded body of a silicone resin and a silicone rubber, a method for manufacturing the integrally molded body, and a curable silicone composition for manufacturing the body. More specifically, the present invention relates to an integrally molded body and method of manufacturing the integrally molded body composed of a cured body of a hydrosilation-curable silicone resin composition, and a cured body of a hydrosilation-curable or peroxide-curable silicone rubber composition, where the cured body of the silicone resin composition and the cured body of the silicone rubber composition are firmly bonded to each other via adhesion. The present invention also relates to a hydrosilation-curable silicone resin composition used for manufacturing this integrally molded body.

### Background of the Invention

US Patent 5,645,941 (July 8, 1997) discloses a composite body of a firmly adhesively bonded silicone resin and a silicone rubber, for use in the manufacture of parts for electric devices, electronic devices, office-automation devices, precision instruments, and vehicles. British Patent 227 9616 (January 11,1995) discloses a hard key-top push button switch made from a silicone rubber coated with a hard silicone resin coating film. However, molding of a silicone rubber and a silicone resin into an integral body, where the silicone rubber and silicone resin are firmly bonded via adhesion, remains a problem.

### Summary of the Invention

It is an object of the present invention is to provide an integral body composed of a firmly adhesively bonded silicone resin and silicone rubber, a reliable method for manufacturing such a body, and a hydrosilation-curable silicone composition for manufacturing such a body.

The present invention relates to:
[1] an integrally molded body of a silicone resin and silicone rubber comprising:
   a cured body of (A) a curable silicone resin composition comprising:
      100 parts by weight of (A1) an organopolysiloxane resin that contains at least two silicon-bonded alkenyl groups, and not less than 30 mole percent of total siloxane units of RSiO_{3/2} units where R is a univalent hydrocarbon group having 1 to 6 carbon atoms,
      (A2) an organopolysiloxane having a molecular structure between branched and resinous that contains silicon-bonded phenyl groups and at least two silicon-bonded hydrogen atoms wherein (A2) is present
      in an amount such that the ratio of the mole number of silicon-bonded hydrogen atoms of (A2) to the mole number of alkenyl groups in (A1) is within the range of 0.4 to 0.98, and (A3) a platinum group metal catalyst in an amount sufficient for cross-linking and curing (A1) and (A2), and
   a cured body of (B) a silicone rubber composition comprising:
      100 parts by weight of (B1) a diorganopolysiloxane that contains at least two silicon-bonded alkenyl groups,
      (B2) an organopolysiloxane that contains at least two silicon-bonded hydrogen atoms in an amount such that the ratio of the mole number of silicon-bonded hydrogen atoms of (B2) to the mole number of alkenyl groups in (B1) is within the range of 1.0 to 20.0, and (B3) a platinum group metal catalyst or an organic peroxide in an amount sufficient for cross-linking and curing (B1) and (B2).
[2] An integrally molded body of a silicone resin and a silicone rubber comprising:
   a cured body of (A) a curable silicone resin composition comprising:
      100 parts by weight of (A1) an organopolysiloxane resin that contains at least two silicon-bonded alkenyl groups, and not less than 30 mole percent of total siloxane units of RSiO_{3/2} units where R is a univalent hydrocarbon group having 1 to 6 carbon atoms,
      (A4) a non-silicone-type organic compound that contains at least two alkenyl groups, having a molecular weight not less than 150, and an index of refraction within the range of 1.45 to 1.56 measured at 25 °C in an amount of 2 to 40 parts by weight per 100 parts by weight of (A1),
      (A2) an organopolysiloxane having a molecular structure between branched and resinous that contains silicon-bonded phenyl groups and at least two silicon-bonded hydrogen atoms wherein (A2) is present
      in an amount such that the ratio of the mole number of silicon-bonded hydrogen atoms of (A2) to the mole number of alkenyl groups in (A1) and (A4) is within the range of 0.4 to 0.98, and
      (A3) a platinum group metal catalyst in an amount sufficient for cross-linking and curing (A1), (A2) and (A4), and
   a cured body of (B) a silicone rubber composition comprising:
      100 parts by weight of (B1) a diorganopolysiloxane that contains at least two silicon-bonded alkenyl groups,
      (B2) an organopolysiloxane that contains at least two silicon-bonded hydrogen atoms in an amount such that the ratio of the mole number of silicon-bonded hydrogen atoms of (B2) to the mole number of alkenyl groups in (B1) is within the range of 1.0 to 20.0, and
      (B3) a platinum group metal catalyst or an organic peroxide in an amount sufficient for cross-linking and curing (B1) and (B2).
[3] The integrally molded body of a silicone resin and silicone rubber according to [1] wherein the hardness of the cured body of a curable silicone resin composition (A) which is measured with a Type D durometer according to Japanese Industrial Standard K 7215 is within the range of 50 to 90.
[4] The integrally molded body of a silicone resin and silicone rubber according to [2] wherein the hardness of the cured body of a curable silicone resin composition (A) which is measured with a Type D durometer according to Japanese Industrial Standard K 7215 is within the range of 50 to 90.
[5] A method for manufacturing an integrally molded body of a silicone resin and silicone rubber according to [1] comprising the steps of loading a curable silicone resin composition (A) and a silicone rubber composition (B) into the same mold, and simultaneously curing and molding (A) and (B).
[6] A method for manufacturing an integrally molded body of a silicone resin and silicone rubber according to [2] comprising the steps of loading a curable silicone resin composition (A) and a silicone rubber composition (B) into the same mold, and simultaneously curing and molding (A) and (B).
[7] A method for manufacturing an integrally molded body of a silicone resin and silicone rubber according to [1] comprising the steps of loading a curable silicone resin composition (A) into a mold, and curing and molding the silicone resin; and then loading a silicone rubber composition (B) into the same mold, and curing and molding the silicone rubber composition in the same mold.
[8] A method for manufacturing an integrally molded body of a silicone resin and silicone rubber according to [2] comprising the steps of loading (A) a curable silicone resin composition into a mold, and curing and molding the silicone resin; and then loading (B) a silicone rubber composition into the same mold, and curing and molding the silicone rubber composition in the same mold.
[9] The method according to [7] wherein the hardness of the cured body of (A) a curable silicone resin composition cured and molded in the mold which is measured with a Type D durometer according to Japanese Industrial Standard K 7215 is within the range of 50 to 90.
[10] The method according to [8] wherein the hardness of the cured body of (A) a curable silicone resin composition cured and molded in the mold which is measured with a Type D durometer according to Japanese Industrial Standard K 7215 is within the range of 50 to 90.
[11] A curable silicone resin composition comprising:
   (A1a) a polyalkylalkenylsiloxane resin that contains at least two silicon-bonded alkenyl groups and not less than 30 mole percent of total siloxane units of R¹SiO_{3/2} units where R¹ is an alkyl group with 1 to 6 carbon atoms,
   (A4a) a hydrocarbon compound that contains at least three alkenyl groups, having a molecular weight not less than 150, and an index of refraction within the range of 1.45 to 1.56 at 25 °C,
   the total amount of components (A1a) and (A4a) in the composition being 100 parts by weight, and where component (A4a) is used in an amount of 2 to 40 parts by weight per 100 parts of component (A1a),
   (A2) an organopolysiloxane that contains at least two silicon-bonded hydrogen atoms in an amount such that the ratio of the mole number of silicon-bonded hydrogen atoms of component (A2), to the total mole number of alkenyl groups in components (A1a) and (A4a), is within the range of 0.1 to 1.0, and
   (A3) a platinum group metal catalyst in an amount sufficient for cross-linking and curing (A1a), (A2), and (A4a).

The integrally molded body of a silicone resin and silicone rubber is characterized by strong adhesion between the silicone resin and silicone rubber. The method for manufacturing the body integrally molded from a silicone resin and a silicone rubber, provides stability in manufacturing the body, while the silicone resin composition provides the cured resin with high hardness. These and other features of the invention will become apparent from a consideration of the detailed description.

### Best Mode for Carrying Out the Invention

The curable silicone resin composition (A) used for manufacturing the integrally molded body of the present invention cures via hydrosilation reaction between silicon-bonded alkenyl groups of a component (A1) and silicon-bonded hydrogen atoms of a component (A2), under the catalytic action of a component (A3).

Organopolysiloxane resin (A1) contains in its molecule at least two silicon-bonded alkenyl groups, and no less than 30 mole percent of total siloxane units of units represented by RSiO_{3/2,} where R is a univalent hydrocarbon group having 1 to 6 carbon atoms. It is one of the main components of the curable silicone resin composition. The silicon-bonded alkenyl groups of (A1) may have less than 12 carbon atoms, and may be represented by vinyl, allyl, butenyl, pentenyl, hexenyl, heptenyl, octenyl, nonenyl, decenyl, undecenyl, and dodecenyl groups. Most preferred are vinyl, butenyl, and hexenyl groups. At least two, and preferably more than three such alkenyl groups may coexist in the molecule. The alkenyl groups present in the molecule may be the same or different type. RSiO_{3/2} units should exceed 30 mole percent, preferably 50 mole percent of the total amount of siloxane units where R designates a univalent hydrocarbon group having 1 to 6 carbon atoms. R group is exemplified by methyl, ethyl, propyl, butyl, or other alkyl groups, and a phenyl group. The propyl and phenyl groups are preferred. The organopolysiloxane resin may have a weight-average molecular weight within the range of 200 to 80,000, preferably between 300 to 20,000. Component (A1) contained in the curable silicone resin composition (A) may be a organopolysiloxane resin of one type, or a mixture of organopolysiloxane resins of two or more types. At 25 °C, the organopolysiloxane resin may be a liquid or a solid. The liquid form is preferred for molding.

Component (A1) may be a organopolysiloxane resin represented by the following average molecular formulae, where Me designates a methyl group, Ph designates a phenyl group, Vi designates a vinyl group, and Hex designates a hexenyl group:

(PhSiO_{3/2})₃₀ [ViMe₂ SiO_{1/2}]₁₀

(PhSiO_{3/2})₇ (Me₂ SiO_{2/2})_{0.6} [HexMeSiO_{2/2}]₂

(PhSiO_{3/2})₁₅ (ViMe SiO_{2/2})₅

(PhSiO_{3/2})₇₀ (Me₂ SiO_{2/2})₁₀ [HexMeSiO_{2/2}]₂₀

(C₃H₇SiO_{3/2})₁₃ (ViMe₂ SiO_{1/2})₂

Component (A1) can be produced by co-hydrolyzing corresponding at least one organochlorosilanes or organoalkoxysilanes, heating the hydrolysis product in the presence of a minute quantity of a potassium catalyst, subjecting the residual silanol and alkoxy groups to condensation, and then neutralizing the product with an acid.

Component (A2) is the cross-linking agent for component (A1). Silicon-bonded hydrogen atoms of (A2) participate in the hydrosilation reaction with the alkenyl groups of component (A1). Component (A2) should contain in its molecule at least two, and preferably at least three silicon-bonded hydrogen atoms. The silicon-bonded organic groups present in Component (A2) may be represented by methyl, ethyl, propyl, butyl, other alkyl, or phenyl groups. Methyl and phenyl groups are preferred. Component (A2) may have a weight-average molecular weight within the range of 100 to 20,000, preferably between 200 to 7,000. For better miscibility with component (A1), it is preferred that at room temperature, component (A2) is a liquid. From the point of view of hardness of a cured body obtained from curable silicone resin composition (A) (A2) has a molecular structure between being branched and resinous. Component (A2) used in a curable silicone resin composition (A) may be of one type or it may be comprised of a mixture of two or more types.

Component (A2) can be represented by the following average molecular formulae:

(Me₂HSiO_{1/2})₆ (PhSiO_{3/2})₄

(Me₂HSiO_{1/2})₅ (PhSiO_{3/2})₅

(Me₂HSiO_{1/2})₄ (PhSiO_{3/2})₆

(Me₂HSiO_{1/2})₄ (MePhSiO_{2/2})₂ (SiO_{4/2})₂ and

(Me₂HSiO_{1/2})₆ (MePhSiO_{2/2})₂ (SiO_{4/2})₂

Component (A2) can be produced by hydrolyzing corresponding at least one organochlorosilanes or organoalkoxysilanes in the presence of an acidic catalyst, subjecting the silanol groups or alkoxy groups to partial condensation by heating, subjecting the obtained product of partial condensation to an equilibrium reaction with 1,1,3,3-tetramethyl-1,3-disiloxane, and then neutralizing the product. Alternatively, component (A2) can be produced in a process where, instead of hydrolyzing the organoalkoxysilane alone, the organoalkoxysilane and tetraalkoxysilane are co-hydrolyzed in the presence of an acidic catalyst

Component (A2) is used in such an amount that the ratio of the mole number of the silicon-bonded hydrogen atoms of component (A2), to the mole number of alkenyl groups in component (A1), is within the range of 0.40 to 0.98. If the amount of component (A2) is below 0.1, the silicone resin composition (A) will be insufficiently cured. If component (A2) is used in an amount exceeding 1.0, this will impair adhesion of a cured body of a curable silicone resin composition to a cured body of a silicone rubber composition (B).

Component (A3) is the catalyst that promotes the hydrosilation reaction between the alkenyl groups of component (A1) and the silicon-bonded hydrogen atoms of component (A2), i.e., component (A3) promotes a cross-linking reaction between components (A1) and (A2), and hence, it provides for curing of the curable resin composition (A). Component (A3) can be a platinum group metal such as ruthenium, rhodium, palladium, osmium, iridium, or platinum per se, or compounds of these metals that possess a catalytic activity with regard to a hydrosilation reaction between alkenyl groups and silicon-bonded hydrogen atoms. Preferred for component (A3) are platinum type catalysts, such as platinum black, platinum on a fine-powdered carbon black carrier, platinum on a fine-powdered silica carrier, chloroplatinic acid, an alcohol solution of a chloroplatinic acid, a platinum-olefin complex, a divinyl-tetramethyldisiloxane complex of a chloroplatinic acid, a divinyl-tetramethyldisiloxane complex of platinum, and thermoplastic resin powders that contain platinum-group metals. Component (A3) should be used in a catalytic amount, preferably in an amount of 0.1 to 1,000 ppm of the pure metal contained in component (A3), per total amount of component (A1). If used in an amount of less than 0.1 ppm, curing is delayed. Use of the catalyst in an amount exceeding 1,000 ppm will not noticeably improve curability, and is economically unjustifiable.

A non-silicone-type organic compound (A4) that contains in its molecule at least two alkenyl groups can also be used. Component (A4) should have a molecular weight not less than 150, and an index of refraction within the range of 1.45 to 1.56 at 25 °C. Component (A4) improves the hardness and the bending strength of a cured body obtained by curing a curable silicone resin composition (A). If the index of refraction of component (A4) is beyond the range of 1.45 to 1.56 at 25 °C, this impairs the miscibility of component (A4) with components (A1) and (A2). If component (A4) has a molecular weight below 150, it will have too high a volatility. When curing of the curable silicone resin composition (A) is carried out by heating, for example, this will change the ratio of the mole number of silicon-bonded hydrogen atoms of component (A2) to the total mole number of alkenyl groups in components (A1) and (A4), and it will produce a strong odor.

Component (A4) is exemplified by 1,3-di(isopropenyl)benzene, triallyl-1,2,4-benzenetricarboxylate, triallyl-1,3,5-triazine-2,4,6-(*1H, 3H, 5H*)-trione, 1,2,4-trivinylcyclohexane, 1,3,5-trivinylchlorohexane, and trivinylbenzene.

In order to increase the cross-linking density, it is preferred to have in one molecule three alkenyl groups. If component (A1) is a polyalkylalkenylsiloxane resin, the cured body can not be produced with high hardness. However, hardness of the cured body can be improved by adding component (A4). Component (A4) should be used in an amount of 2 to 40 parts by weight, preferably 2 to 30 parts by weight, per 100 parts by weight of component (A1). If it is used in an amount of less than 2 parts by weight, the cured body obtained by curing a silicone resin composition (A) will have insufficient hardness and bending strength. If the amount of component (A4) exceeds 40 parts by weight, this will reduce the thermal resistance of the cured body.

If a curable silicone resin composition (A) contains component (A4), it is required that component (A2) be used in an amount that provides a ratio of the mole number of silicon-bonded hydrogen atoms of component (A2), to the total mole number of alkenyl groups in components (A1) and (A4), within the range of 0.4 to 0.98.

Components (A1) to (A3) are necessary components of a curable silicone resin composition (A). However, in order to improve the storage stability and handling of composition (A) in processes, composition (A) may also incorporate a hydrosilation reaction inhibitor (A5). Component (A5) can be a compound such as 3-methyl-1-butyn-3-ol; 3,5-dimethyl-1-hexyn-3-ol; 2-phenyl-3-butyn-2-ol; or similar alkyne alcohol; 3-methyl-3-pentene-1-yne; 3,5-dimethyl-3-hexene-1-yne; or other acetylenic hydrocarbons; or other ethylenic hydrocarbons; 1,3,5,7-tetramethyl-1,3,5,7-tetrahexenyl cyclotetrasiloxane; 1,3,5,7-tetramethyl-1,3,5,7-tetrahexanyl cyclotetrasiloxane; or benzotriazole. Component (A5) should be used in an amount that inhibits curing of composition (A) at room temperature, but that allows curing with heating. It is preferred to add component (A5) in an amount of 0.0001. to 10 parts by weight, preferably 0.001 to 5 parts by weight, per 100 parts by weight of the sum of components (A1) and (A2), or per 100 parts by weight of the sum of components (A1), (A2), and (A4).

To improve the adhesive properties of the silicone rubber, the curable silicone resin composition (A) may be combined with an adhesion improver (A6). (A6) is exemplified by silane coupling agents such as 3-methacryloxypropyltrimethoxysilane, 3-acryloxypropyl trimethoxysilane, or similar organoalkoxysilanes that contains an acryloxy group; 3-aminopropyltrimethoxysilane, 3-(2-aminoethyl)-aminopropyl trimethoxysilane, or similar organoalkoxysilanes that contains an amino group; 3-glycidoxypropyltrimethoxysilane, similar organoalkoxysilanes that contains an epoxy group, or condensation-reaction products such as a condensation reaction product between 3-glycidoxypropyltrialkoxysilane and a silanol-endcapped dimethyloligosiloxane, a condensation reaction product between 3-glycidoxypropyltrialkoxysilane and a silanol-endcapped methylvinyloligosiloxane, and a product of a condensation reaction between 3-glycidoxypropyltrialkoxysilane and a silanol-endcapped dimethylsiloxane-methylvinylsiloxane copolymer. Component (A6) can be used in an amount of 0.1 to 10 parts by weight, preferably 0.1 to 5 parts by weight, per 100 parts by weight of the sum of components (A1) and (A2), or per 100 parts by weight of the sum of components (A1), (A2), and (A4).

The curable silicone resin composition (A) may further contain iron oxide, ferrocene, cerium oxide, cerium polysiloxane, or other heat-resistant agents and pigments. For improving the mechanical properties of the cured product, the composition (A) may contain an inorganic filler such as fumed silica, precipitated silica, titanium dioxide, carbon black, alumina, quartz powder, or such inorganic fillers that have been subjected to a hydrophobic surface treatment with an organoalkoxysilane, organochlorosilane, organosilazane, or other organic silicon compound. When it is required that the cured body be transparent, the inorganic fillers should be added in amounts that do not inhibit transparency. Other optional additives that may be included are tetramethoxysilane, tetraethoxysilane, dimethyldimethoxysilane, methylphenyldimethoxysilane, methylphenyldiethoxysiolane, phenyltrimethoxysilane, methyltrimethoxysilane, methyltriethoxysilane, vinyltrimethoxysilane, allyltrimethoxysilane, allyltriethoxysilane, or other alkoxysilanes.

Curable silicone resin composition (A) is prepared by uniformly mixing components (A1) to (A3), or components (A1) to (A4), if necessary, with addition of other optional components. Composition (A) can be prepared with a mixer such as a Ross mixer, planetary mixer, or Hobart mixer.

If the curable silicone resin composition (A) does not contain a hydrosilation-reaction inhibitor (A5), curing can be carried out by maintaining it at room temperature. In the event composition (A) contains a hydrosilation-reaction inhibitor (A5), curing can be accelerated by heating. There are no limitations with regard to a curing temperature. For example, curing can be carried out at a temperature within the range of 30 to 350 °C, preferably from 100 to 200 °C. The hardness of the cured body measured with a Type D durometer according to Japanese Industrial Standard K 7215, should be within the range of 50 to 90, preferably 65 to 80.

The silicone rubber composition (B) used herein cures via a hydrosilation reaction between the silicon-bonded alkenyl groups of component (B1) and the silicon-bonded hydrogen atoms of component (B2), by the catalytic action of component (B3). Component (B1) is a polydiorganosiloxane with at least two silicon-bonded alkenyl groups in its molecule and is one of the main constituents of the silicone rubber composition (B).

Component (B 1) has a substantially linear molecular structure, but a partially branched molecular structure can be tolerated to some extent. Silicon-bonded alkenyl groups of component (B) can be represented by vinyl, allyl, butenyl, and hexenyl groups. There are no limitations with regard to the position of the alkenyl groups, and they may be located at the molecular terminals, in side chains, or in both locations. The location at the molecular terminals is preferable, since the silicone rubber obtained has superior mechanical properties. In addition to alkenyl groups, component (B1) may contain other silicon-bonded organic groups such as methyl, ethyl, propyl, butyl, octyl, and other alkyl groups; phenyl, tolyl, and other aryl groups; univalent saturated hydrocarbon groups such as phenethyl group, 3-chloropropyl group, 3,3,3-trifluoropropyl group, and other halogenated alkyl groups. There are no limitations with regard to the viscosity of component (B1), and the viscosity at 25 °C may be within the range of 10 to 1,000,000 mPa·s, preferably between 100 to 200,000 mPa·s.

Component (B1) can be represented by a polydimethylsiloxane capped at both molecular terminals with dimethylvinylsiloxy groups, a methylvinylsiloxane·dimethylsiloxane copolymer capped at both molecular terminals with trimethylsiloxy groups, a methylvinylsiloxane·dimethylsiloxane copolymer capped at both molecular terminals with dimethylvinylsiloxy groups, a methylvinylsiloxane·dimethylsiloxane copolymer capped at both molecular terminals with dimethylvinylsiloxy groups, a methyl (3,3,3-trifluoropropyl) siloxane·dimethylsiloxane copolymer capped at both molecular terminals with dimethylvinylsiloxy groups, a polydimethylsiloxane capped at both molecular terminals with dimethylhexenylsiloxy groups, a methylhexenylsiloxane·dimethylsiloxane copolymer capped at both molecular terminals with trimethylsiloxy groups, a methylhexenylsiloxane·dimethylsiloxane copolymer capped at both molecular terminals with dimethylhexenylsiloxy groups, a methylphenylsiloxane·dimethylsiloxane copolymer capped at both molecular terminals with dimethylhexenylsiloxy groups, and a methyl (3,3,3-trifluoropropyl) siloxane·dimethylsiloxane copolymer capped at both molecular terminals with dimethylhexenylsiloxy groups.

Component (B2) is a polyorganosiloxane that contains at least two silicon-bonded hydrogen atoms in its molecule. (B2) is the agent that cures component (B1). There are no limitations with regard to the molecular structure of component (B2), and so it may have a linear, partially-branched, cyclic, or resinous structure. The silicon-bonded organic groups of component (B2) can be represented by methyl, ethyl, propyl, and other alkyl groups; phenyl, tolyl, and other aryl groups; phenethyl or other univalent hydrocarbon groups represented by aralkyl groups; 3-chloropropyl group, 3,3,3-trifluoropropyl group, and other halogenated alkyl groups. There are no limitations with regard to the viscosity of component (B2), and the viscosity at 25 °C may be within the range of 1 to 10,000 mPa·s. When component (B1) is a polydiorganosiloxane having two alkenyl groups in its molecule, it is preferred that component (B2) have three or more silicon-bonded hydrogen atoms. When component (B1) is a polydiorganosiloxane with three or more alkenyl groups in its molecule, component (B2) may be a polyorganosiloxane that contains only two silicon-bonded hydrogen atoms in its molecule.

Component (B2) can be exemplified by a polymethylhydrogensiloxane capped at both molecular terminals with trimethylsiloxy groups, a methylhydrogensiloxane·dimethylsiloxane copolymer capped at both molecular terminals with trimethylsiloxy groups, a cyclic methylhydrogensiloxane·dimethylsiloxane copolymer capped at both molecular terminals with dimethylhydrogensiloxy groups, a methylhydrogensiloxane·dimethylsiloxane copolymer, cyclic polymethylhydrogensiloxane, an organosiloxane copolymer consisting of siloxane units R₃SiO_{1/2}, siloxane units R₂HSiO_{1/2}, and siloxane units SiO_{4/2}, an organosiloxane copolymer consisting of siloxane units R₂HSiO₁ₗ₂ and siloxane units SiO_{4/2}, an organosiloxane copolymer consisting of siloxane units of formula RHSiO_{2/2} and siloxane units of formula RSiO_{3/2} or siloxane units of formula HSiO_{3/2}, or a mixture of two or more of these polyorganosiloxanes. R designates a univalent saturated hydrocarbon group or a halogenated alkyl group as previously described.

In the silicone rubber composition (B), component (B2) should be used in such an amount that the mole ratio of the mole number of silicon-bonded hydrogen atoms of component (B2) to the mole number of alkenyl groups in component (B1) is within the range of 1.0 to 20.0, preferably 1.0 to 10.0. An amount smaller than the lower limit of the range will lead to an insufficient curing of the silicone rubber composition (B). An amount exceeding the upper limit of the range will lower the mechanical properties and impair the adhesion of the obtained silicone rubber to the cured body produced from silicone resin composition (A).

The platinum group metal catalyst used in component (B3) is the same as described above. An organic peroxide can also be used for cross-linking component (B1) and for curing the silicone rubber composition (B). The organic peroxide is represented bis(benzoyl) peroxide, t-butyl perbenzoate, bis(p-methylbenzoyl) peroxide, bis(o-methylbenzoyl) peroxide, bis(2,4-dimethylbenzoyl) peroxide, dicumyl peroxide, di(t-butyl) peroxide, 2,5-dimethyl-2,5-di(t-butylperoxy) hexane, and 2,5-dimethyl-2,5-di(t-butylperoxy) hexine.

Component (B3) should be used in an amount sufficient for curing the silicone rubber composition (B). If component (B3) is a platinum group metal catalyst, the metallic part of component (B3) expressed in weight units, should be within the range of 0.1 to 1,000 ppm, based upon the weight of component (B1). If it is used in an amount of less that 0.1 ppm, curing will be delayed. If the amount of component (B3) exceeds 1000 ppm, this will not improve curing, and is economically unjustifiable. If component (B3) is an organic peroxide, it should be used in an amount of 0.1 to 10 parts by weight per 100 parts by weight of component (B1).

The silicone rubber composition (B) consists of components (B1) to (B3), but it can additionally contain dry-process silica, wet-process silica, or a similar reinforcement silica in an amount of 10 to 60 parts by weight per 100 parts by weight of component (B1), and a crepe hardening inhibitor such as an organoalkoxysilane, organochlorosilane, or organosilazane. Composition (B) may further contain such reinforcement silicas that have been subjected to a hydrophobic surface treatment with an organic silicon compound such as diorganosiloxane oligomers capped at both molecular terminals with silanol groups, an organohydroxysilane, and a hexaorganodisilazane. Use of reinforcement silicas noticeably improves the adhesive strength of the silicone rubber (B). The addition of a hydrosilation reaction inhibitor as previously described is also preferred if the silicone rubber composition (B) is cured by a hydrosilation reaction. Other additives can be contained provided they do not interfere with the function of (B). Some examples of such additives are diatomaceous earth, quartz powder, calcium carbonate powder, carbon black, alumina powder, alumina hydroxide powder, or similar inorganic fillers; cerium hydroxide, cerium silanolate, cerium fatty acid salt, or similar heat-resistant agents; stearic acid, zinc stearate, calcium stearate, or similar higher fatty acid; metal salts of the latter as mold-release agents; and pigments.

Silicone rubber composition (B) can be prepared by uniformly mixing components (B1) to (B3). If the composition (B) contains a reinforcement silica, a premixture can be prepared from component (B1), the reinforcement silica, and the crepe hardening inhibitor; or from component (B1) and a hydrophobized reinforcement silica. Mixing can be carried out using a kneader mixer, blade-type mixer, or other mixing apparatus. Components (B1) can be kneaded to uniform conditions with heating, cooled, and then combined with components (B2) and (B3) using a blade-type mixer or two-roll mill.

A cured body obtained from the silicone rubber composition (B) should have hardness of 30 to 70, preferably 40 to 60, measured with a Type A durometer as specified by Japanese Industrial Standard K 6253.

An integrally molded body of a silicone resin and silicone rubber can be produced by loading the curable silicone resin composition (A) and the silicone rubber composition (B) into the same mold, and curing both compositions (A) and (B) simultaneously; or by heating the curable silicone resin composition (A) in a mold to a semi-cured or cured state, and then loading into the mold and curing the curable silicone rubber composition (B). In the above process, the mold is heated to 100 to 250 °C, and the contents of the mold are molded under pressure for a time interval from several seconds to several minutes.

The integrally molded product obtained by the above-described method, consists of a silicone resin of high hardness, and an elastomeric silicone rubber that is firmly bonded to the silicone resin via adhesion. Hence, the resulting product is suitable for manufacturing various parts for electric devices, electronic devices, office-automation devices, vehicles, and precision instruments. There are no limitations with regard to the shape of the resulting product. It can be in the form of a film, sheet, tape, block, rod, or tube.

In another embodiment, the curable silicone resin composition (A) of the invention may be composed of a polyalkylalkenylsiloxane resin (A1a), a hydrocarbon compound(A4a), a polyorganosiloxane(A2), and a platinum metal group catalyst (A3). Component (A1a) should contain in its molecule at least two silicon-bonded alkenyl groups, and no less than 30 mole percent of total siloxane units of units represented by R¹ SiO_{3/2} wherein R¹ is an alkyl group with 1 to 6 carbon atoms. Component (A4a) contains in its molecule at least three alkenyl groups, should have a molecular weight not less than 150, and an index of refraction within the range of 1.45 to 1.56 at 25 °C. The total amount of components (A1a) and (A4a) used in composition (A) should be 100 parts by weight in which component (A4a) is used in an amount of 2 to 40 parts by weight, per 100 parts of component (A1a).

In this embodiment, component (A2) previously described contains at least two silicon-bonded hydrogen atoms in its molecule, and component (A2) is used in such an amount that the ratio of the mole number of the silicon-bonded hydrogen atoms of component (A2) to the total mole number of alkenyl groups in components (A1a) and (A4a) is within the range of 0.1 to 1.0. Component (A3) previously described is used in an amount sufficient for cross-linking and curing of the components (A1a), (A2), and (A4a).

Otherwise, component (A1a) has the same characteristics as component (A1) previously described, and component (A4a) has the same characteristics as component (A4) previously described. Thus, the previous description of component (A1) and component (A4) applies in this embodiment, with reference to the necessary components, optional components, preparation method, curability, curing conditions, and properties of the cured body.

Thus, R¹ in component (A1a) designates an alkyl group with 1 to 6 carbon atoms. The following are specific examples of component (A1a):

(C₃H₇ SiO_{3/2})₁₃ (ViMe₂SiO_{1/2})₂ and

(C₃H₇ SiO_{3/2})₈ (ViMe₂SiO_{1/2})₂.

Component (A4a) is a hydrocarbon that has a refractory index of 1.45 to 1.56 at 25 °C, and a molecular weight higher than 150. Component (A4a) contains at least three alkenyl groups in its molecule. Component (A4a) is exemplified by 1,2,4-trivinylcyclohexane, 1,3,5-trivinyl cyclohexane, and trivinyl benzene. The cured body obtained from curable silicone resin composition (A) that contains components (A1a), (A2), and (A3), will not have a significant hardness, but the hardness is noticeably improved by adding component (A4a).

### Examples

Practical examples and comparative examples are provided herein below in order to specifically explain the present invention. The present invention, however, is not limited to these practical examples.
In all of the following practical examples and comparative examples, the parts are to be understood as meaning parts by weight. The values of the viscosities were measured at 25 °C. The values of the weight-average molecular weight were measured by gel-permeation chromatography (GPC) and recalculated for polystyrene as the standard. The hardness of the body obtained by curing the curable silicone resin composition (A) was determined with a Type D durometer in compliance with Japanese Industrial Standard K 7215-1986. This JIS is a standard test method for determining the durometer hardness of plastics. The hardness of the body obtained by curing the curable silicone rubber composition (B) was determined with a Type A durometer in compliance with Japanese Industrial Standard K 6253-1993 entitled *Testing Method for Hardness.* In the examples, Ph is used to designate phenyl, Me designates methyl, and Vi designates vinyl. The phrase *silicone resin of an integrally molded body* means a cured body of the curable silicone resin composition (A), and the phrase *silicone rubber* means a cured body of the silicone rubber composition (B).

### Practical Example 1

A curable silicone resin composition (R1) was prepared by combining (i) a mixture composed of 84 gram of polyphenylmethylvinylsiloxane resin having a weight-average molecular weight of 1,600, and represented by the average molecular formula (PhSiO_{3/2})₇ (ViMe₂SiO_{1/2})₃, and 16 gram of polyphenylmethylvinylsiloxane resin having a weight-average molecular weight of 408, and represented by the average molecular formula (PhSiO_{3/2}) (ViMe₂SiO_{1/2})₃; (ii) a mixture composed of 84 gram of polyphenylmethylhydrogensiloxane having a weight-average molecular weight of 1,100, and represented by the average molecular formula (PhSiO_{3/2})₆ (HM₂SiO_{1/2})₄, and 0.17 gram of 1-ethynyl-1-cyclohexanol.

This mixture was further combined with 0.017 gram of a complex of platinum and 1,3-divinyl-1,1,3,3-tetramethyldisiloxane containing 4 weight percent of metallic platinum. In curable silicone resin composition (R1), the ratio of the mole number of silicon-bonded hydrogen atoms to the mole number of vinyl groups was 0.79.

A silicone rubber base was prepared by loading a kneader mixer with five components and kneading the five components at a reduced pressure for 60 minutes at 175 °C. The five components were (i) 930 gram of a methylvinylsiloxane-dimethylsiloxane copolymer gum capped at both molecular terminals with dimethylvinylsiloxy groups, containing 0.064 weight percent of vinyl groups, and having a degree of polymerization (DP) of 5,000; (ii) 50 gram of a methylvinylsiloxane-dimethylsiloxane copolymer gum capped at both molecular terminals with trimethylsiloxy groups, containing 1.44 weight percent of vinyl groups, and having a DP of 5,000; (iii) 30 gram of a polydimethylsiloxane gum capped at both molecular terminals with dimethylvinylsiloxy groups, having 0.01 weight percent of vinyl groups, and a DP of 5,000; (iv) 70 gram of a dimethylsiloxane oligomer capped at both molecular terminals with silanol groups, and having a viscosity of 60 mPa·s; (v) 100 gram of a dry-process silica having a specific surface of 200 m²/gram, and 540 gram of a wet-process silica having a specific surface of 200 m²/gram.

1,720 gram of this silicone rubber base were cooled and additionally kneaded in a two-roll mill with 16 gram of a methylhydrogensiloxane·dimethylsiloxane copolymer capped at both molecular terminals with trimethylsiloxy groups, and represented by the average molecular formula Me₃SiO(MeHSiO_{2/2})₃ (Me₂SiO_{2/2})₃SiMe₃, 3.5 gram of a polymethylhydrogensiloxane capped at both molecular terminals with trimethylsiloxy groups, and having a viscosity of 20 mPa·s, and 3.5 gram of 2,5-dimethyl-2,5-di-(t-butylperoxy) hexane. As a result, a silicone rubber composition (E1) was obtained. The ratio of the mole number of silicon-bonded hydrogen atoms to the mole number of vinyl groups in composition (E1) was 2.9.

A metal mold was loaded with equal half-quantities of the curable silicone resin composition (R1), and the silicone rubber composition (E1). The contents were press-molded at 170 °C for 5 minutes at a pressure of 20 MPa, to form a 60 mm-long, 40 mm-wide, and 8 mm-thick, integrally molded body of the silicone resin and silicone rubber. When the silicone resin and silicone rubber was clamped and stretched in opposite directions, the silicone resin and the silicone rubber remained strongly adhered, and did not show any interfacial separation. The silicone resin had a Type D durometer hardness of 72, and the silicone rubber had a Type A durometer hardness of 57.

### Practical Example 2

A curable silicone resin composition (R2) was prepared by combining (i) a mixture composed of 77 gram of polyphenylmethylvinylsiloxane resin having a weight-average molecular weight of 1,600, and represented by the average molecular formula (PhSiO_{3/2})₇ (ViMe₂SiO_{1/2})₃, and 23 gram of polyphenylmethylvinylsiloxane resin having a weight-average molecular weight of 408, and represented by the average molecular formula (PhSiO_{3/2}) (ViMe₂SiO_{1/2})₃; (ii) a mixture composed of 75 gram of polyphenylmethylhydrogensiloxane having a weight-average molecular weight of 1,100, and represented by the average molecular formula (PhSiO_{3/2})₆ (HMe₂SiO_{1/2})₄, and 0.21 gram of 1-ethynyl-1-cyclohexanol. This mixture was combined with 0.016 gram of a complex of platinum and 1,3-divinyl-1,1,3,3-tetramethyldisiloxane containing 4 weight percent of metallic platinum. The ratio of the mole number of silicon-bonded hydrogen atoms to the mole number of vinyl groups in the curable silicone resin composition (R2) was 0.79.

A metal mold was loaded with equal half-quantities of the curable silicone resin composition (R2), and the silicone rubber composition (E1) prepared in Practical Example 1. The contents were press-molded at 150 °C for 10 minutes, at a pressure of 5 MPa, to form a 60 mm-long, 40 mm-wide, and 8 mm-thick, integrally molded body of the silicone resin and the silicone rubber. When the silicone resin and silicone rubber was clamped and stretched in opposite directions, the silicone resin and the silicone rubber remained strongly adhered, and did not show any interfacial separation. The silicone resin had a Type D durometer hardness of 71, and the silicone rubber had a Type A durometer hardness of 57.

### Practical Example 3

1;720 gram of the silicone rubber base prepared in Practical Example 1 were combined with 16 gram a methylhydrogensiloxane·dimethylsiloxane copolymer capped at both molecular terminals with trimethylsiloxy groups, and having the average molecular formula Me₃SiO(MeHSiO_{2/2})₃ (Me₂SiO_{2/2})₃SiMe₃, and 3.5 gram of a polymethylhydrogensiloxane capped at both molecular terminals with trimethylsiloxy groups, and having a viscosity of 20 mPa·s. The components were mixed in a two-roll mill, combined, and kneaded with 1.5 gram of 1-ethynyl-1-cyclohexanol, and 0.15 gram of a complex of platinum and 1,3-divinyl-1,1,3,3-tetramethyldisiloxane containing 4 weight percent of metallic platinum. A silicone rubber composition (E2) was obtained with a ratio of the mole number of silicon-bonded hydrogen atoms to the mole number of vinyl groups of 2.9.

A metal mold was loaded with equal half-quantities of the curable silicone resin composition (R1) prepared in Practical Example 1, and the silicone rubber composition (E2). The contents were press-molded at 150 °C for 5 minutes, at a pressure of 5 MPa, to form a 60 mm-long, 40 mm-wide, and 8 mm-thick, integrally molded body of the silicone resin and the silicone rubber. When the silicone resin and silicone rubber was clamped and stretched in opposite directions, the silicone resin and the silicone rubber remained strongly adhered, and did not show any interfacial separation. The silicone resin had a Type D durometer hardness of 72, and the silicone rubber had a Type A durometer hardness of 57.

### Practical Example 4

A metal mold was loaded with the curable silicone resin composition (R1) prepared Practical Example 1, and the composition (R1) was press-molded to a semi-cured state for 1 minute, at pressure of 5 MPa and at a temperature of 150 °C. The silicone rubber composition (E1) prepared in Practical Example 1 was then added to the same mold, and press-molded for 10 minutes, at a pressure of 5 MPa and at a temperature of 150 °C. A 60 mm-long, 40 mm-wide, and 8 mm-thick, integrally molded body of the silicone resin and the silicone rubber was produced. When the silicone resin and silicone rubber was clamped and stretched in opposite directions, the silicone resin and the silicone rubber remained strongly adhered, and did not show any interfacial separation. The silicone resin had a Type D durometer hardness of 71, and the silicone rubber had a Type A durometer hardness of 57.

### Practical Example 5

A mixture was prepared from 50 gram of a propylmethylvinylpolysiloxane resin of the average molecular formula (C₃H₇ SiO_{3/2})₈ (ViMe₂SiO_{1/2})₂ containing 4.2 weight percent of vinyl groups and a weight-average molecular weight of 10,000, 2 gram of 1,2,4-trivinylcyclohexane, 26 gram of a polyphenylmethylhydrogensiloxane having a weight-average molecular weight of 1,100, and represented by the average molecular formula (PhSiO_{3/2})₆ (HMe₂SiO_{1/2})₄, and 0.07 gram of 1-ethynyl-1-cyclohexanol. The mixture was further combined and mixed with 0.3 gram of a cerium polysiloxane, and 0.01 gram of a complex of platinum and 1,3-divinyl-1,1,3,3-tetramethyldisiloxane containing 4 weight percent of metallic platinum. A silicone resin composition (R3) was obtained having a ratio of the mole number of silicon-bonded hydrogen atoms to the mole number of vinyl groups of 0.87.

A metal mold was loaded with equal half-quantities of the curable silicone resin composition (R3), and the silicone rubber composition (E1) prepared in Practical Example 1. The contents were press-molded at 150 °C for 5 minutes, at a pressure of 5 MPa, to form a 60 mm-long, 40 mm-wide, and 8 mm-thick, integrally molded body of the silicone resin and the silicone rubber. When the silicone resin and silicone rubber was clamped and stretched in opposite directions, the silicone resin and the silicone rubber remained strongly adhered, and did not show any interfacial separation. The silicone resin had a Type D durometer hardness of 72, and the silicone rubber had a Type A durometer hardness of 57.

### Comparative Example 1

A mixture was prepared from 84 gram of a polyphenylmethylvinylsiloxane resin represented by the average molecular formula (Ph SiO_{3/2})₇ (ViMe₂SiO_{1/2})₃, and having a weight-average molecular weight of 1,600, and 16 gram of a polyphenylmethylvinylsiloxane resin represented by the average molecular formula (Ph SiO_{3/2}) (ViMe₂SiO_{1/2})₃, and having a weight-average molecular weight of 408. The mixture was combined with 84 gram of a polyphenylmethylhydrogensiloxane represented by the average molecular formula (PhSiO_{3/2})₄ (HMeSiO_{1/2})₆, and having a weight-average molecular weight of 1,100, and 0.17 gram of 1-ethynyl-1-cyclohexanol, and then with 0.017 gram of a complex of platinum and 1,3-divinyl-1,1,3,3-tetramethyldisiloxane containing 4 weight percent of metallic platinum. The silicone resin composition (R4) obtained had a ratio of the mole number of silicon-bonded hydrogen atoms to the mole number of vinyl groups of 1.7.

A metal mold was loaded with equal half-quantities of the curable silicone resin composition (R4), and silicone rubber composition (E1) prepared in Practical Example 1. The contents were press-molded at 150 °C for 10 minutes, at a pressure of 5 MPa, to form a 60 mm-long, 40 mm-wide, and 8 mm-thick, integrally molded body of the silicone resin and the silicone rubber. When the silicone resin and silicone rubber was clamped and stretched in opposite directions, the silicone resin and the silicone rubber were separated over the interface. The silicone resin had a Type D durometer hardness of 72, and the silicone rubber had a Type A durometer hardness of 57.

### Comparative Example 2

A mixture was prepared from 77 gram of a polyphenylmethylvinylsiloxane resin represented by the average molecular formula (Ph SiO_{3/2})₇ (ViMe₂SiO_{1/2})₃, and having a weight-average molecular weight of 1,600, and 23 gram of a polyphenylmethylvinylsiloxane resin represented by the average molecular formula (Ph SiO_{3/2}) (ViMe₂SiO_{1/2})₃, and having a weight-average molecular weight of 408. The mixture was combined and mixed with 46 gram of a polyphenylmethylhydrogensiloxane represented by the average molecular formula Me₃SiO (Me₂SiO_{2/2})₄ (MeHSiO_{2/2})₈ (Ph₂ SiO_{2/2})₄ SiMe₃, and having a weight-average molecular weight of 1,300, and 0.17 gram of 1-ethynyl-1-cyclohexanol, and then with 0.017 gram of a complex of platinum and 1,3-divinyl-1,1,3,3-tetramethyldisiloxane containing 4 weight percent of metallic platinum. The silicone resin composition (R5) obtained had a ratio of the mole number of silicon-bonded hydrogen atoms to the mole number of vinyl groups of 0.58.

1,720 gram of the silicone rubber base prepared in Practical Example 1, were kneaded in a two-roll mill, with 4 gram of a methylhydrogensiloxane·dimethylsiloxane copolymer capped at both molecular terminals with trimethylsiloxy groups, and represented by the average molecular formula Me₃SiO(MeHSiO_{2/2})₃ (Me₂SiO_{2/2})₃SiMe₃, 1.5 gram of 1-ethynyl-1-cyclohexanol, and 0.15 gram of a complex of platinum and 1,3-divinyl-1,1,3,3-tetramethyldisiloxane containing 4 weight percent of metallic platinum. The silicone rubber composition (E3) obtained had a ratio of the mole number of silicon-bonded hydrogen atoms to the mole number of vinyl groups of 0.44.

A metal mold was loaded with equal half-quantities of the curable silicone resin composition (R5), and the composition was press-molded to a semi-cured state for 1 minute, at a pressure of 5 MPa, and at a temperature of 150 °C. The silicone rubber composition (E3) was then added to the same mold, and press-molded for 10 minutes at a pressure of 5 MPa, and at a temperature of 150 °C. A 60 mm-long, 40 mm-wide, and 8 mm-thick, integrally molded body of the silicone resin and the silicone rubber was produced. When the silicone resin and silicone rubber was clamped and stretched in opposite directions, the silicone resin and the silicone rubber were separated over the interface. The silicone resin had a Type D durometer hardness of 48, and the silicone rubber had a Type A durometer hardness of 50.

Other variations may be made in compounds, compositions, and methods described herein without departing from the essential features of the invention. The embodiments of the invention specifically illustrated herein are exemplary only and not intended as limitations on their scope except as defined in the appended claims.

## Claims

1. An integrally molded body of a silicone resin and silicone rubber comprising:
a cured body of (A) a curable silicone resin composition comprising:
100 parts by weight of (A1) an organopolysiloxane resin that contains at least two silicon-bonded alkenyl groups, and not less than 30 mole percent of total siloxane units of RSiO_{3/2} units where R is a univalent hydrocarbon group having 1 to 6 carbon atoms,
(A2) an organopolysiloxane having a molecular structure between branched and resinous that contains silicon-bonded phenyl groups and at least two silicon-bonded hydrogen atoms wherein (A2) is present in an amount such that the ratio of the mole number of silicon-bonded hydrogen atoms of (A2) to the mole number of alkenyl groups in (A1) is within the range of 0.4 to 0.98, and
(A3) a platinum group metal catalyst in an amount sufficient for cross-linking and curing (A1) and (A2), and
a cured body of (B) a silicone rubber composition comprising:
100 parts by weight of (B1) a diorganopolysiloxane that contains at least two silicon-bonded alkenyl groups,
(B2) an organopolysiloxane that contains at least two silicon-bonded hydrogen atoms in an amount such that the ratio of the mole number of silicon-bonded hydrogen atoms of (B2) to the mole number of alkenyl groups in (B1) is within the range of 1.0 to 20.0, and
(B3) a platinum group metal catalyst or an organic peroxide in an amount sufficient for cross-linking and curing (B1) and (B2).

2. An integrally molded body of a silicone resin and a silicone rubber comprising:
a cured body of (A) a curable silicone resin composition comprising:
100 parts by weight of (A1) organopolysiloxane resin that contains at least two silicon- bonded alkenyl groups, and not less than 30 mole percent of total siloxane units of RSiO_{3/2} units where R is a univalent hydrocarbon group having 1 to 6 carbon atoms, (A4) a non-silicone-type organic compound that contains at least two alkenyl groups, having a molecular weight not less than 150, and an index of refraction within the range of 1.45 to 1.56 measured at 25 °C in an amount of 2 to 40 parts by weight per 100 parts by weight of (A1),
(A2) an organopolysiloxane having a molecular structure between branched and resinous that contains silicon-bonded phenyl groups and at least two silicon-bonded hydrogen atoms wherein (A2) is present in an amount such that the ratio of the mole number of silicon-bonded hydrogen atoms of (A2) to the mole number of alkenyl groups in (A1) and (A4) is within the range of 0.4 to 0.98, and
(A3) a platinum group metal catalyst in an amount sufficient for cross-linking and curing (A1), (A2) and (A4), and
a cured body of (B) a silicone rubber composition comprising:
100 parts by weight of (B1) a diorganopolysiloxane that contains at least two silicon- bonded alkenyl groups,
(B2) an organopolysiloxane that contains at least two silicon-bonded hydrogen atoms in an amount such that the ratio of the mole number of silicon-bonded hydrogen atoms of (B2) to the mole number of alkenyl groups in (B1) is within the range of 1.0 to 20.0, and
(B3) a platinum group metal catalyst or an organic peroxide in an amount sufficient for cross-linking and curing (B1) and (B2).

3. The integrally molded body of a silicone resin and silicone rubber according to claim 1 or claim 2 wherein the hardness of the cured body of a curable silicone resin composition (A) which is measured with a Type D durometer according to Japanese Industrial Standard K 7215 is within the range of 65 to 80.

4. The integrally molded body of a silicone resin and silicone rubber of any one of claims 1 to 3 wherein the silicon-bonded organic groups present in component (A2) are methyl and phenyl groups.

5. The integrally molded body of a silicone resin and silicone rubber of any one of claims 1 to 4 wherein (A2) is selected from the group of organopolysiloxanes represented by the following average molecular formulae:
(Me₂HSiO_{1/2})₆ (PhSiO_{3/2})₄
(Me₂HSiO_{1/2})₅ (PhSiO_{3/2})₅
(Me₂HSiO_{1/2})₄ (PhSiO_{3/2})₆
(Me₂HSiO_{1/2})₄ (MePhSiO_{2/2})₂ (SiO_{4/2})₂ and
(Me₂HSiO_{1/2})₆ (MePhSiO_{2/2})₂ (SiO_{4/2})₂

6. A method for manufacturing an integrally molded body of a silicone resin and silicone rubber according to any one of claims 1 to 5 comprising the steps of loading a curable silicone resin composition (A) and a silicone rubber composition (B) into the same mold, and simultaneously curing and molding (A) and (B).

7. A method for manufacturing an integrally molded body of a silicone resin and silicone rubber according to any one of claims 1 to 5 comprising the steps of loading a curable silicone resin composition (A) into a mold, and curing and molding the silicone resin; and then loading a silicone rubber composition (B) into the same mold, and curing and molding the silicone rubber composition in the same mold.

8. The method according to claim 7 wherein the hardness of the cured body of (A) a curable silicone resin composition cured and molded in the mold which is measured with a Type D durometer according to Japanese Industrial Standard K 7215 is within the range of 65 to 80.

## Patentansprüche

1. Integral geformter Körper aus einem Siliconharz und einem Siliconkautschuk, umfassend:
einen gehärteten Körper aus (A) einer härtbaren Siliconharzzusammensetzung, enthaltend:
100 Gewichtsteile (A1) eines Organopolysiloxanharzes, das mindestens zwei siliciumgebundene Alkenylgruppen und nicht weniger als 30 Mol-% RSiO_{3/2}-Einheiten, bezogen auf die gesamten Siloxaneinheiten, enthält, worin R eine einbindige Kohlenwasserstoffgruppe mit 1 bis 6 Kohlenstoffatomen ist;
(A2) ein Organopolysiloxan mit einer Molekülstruktur zwischen verzweigt und harzartig, das siliciumgebundene Phenylgruppen und mindestens zwei siliciumgebundene Wasserstoffatome enthält, wobei (A2) in einer Menge vorhanden ist, sodass das Verhältnis der Molzahl von siliciumgebundenen Wasserstoffatomen von (A2) zu der Molzahl von Alkenylgruppen in (A1) innerhalb des Bereichs von 0,4 bis 0,98 liegt, und
(A3) einen Platingruppenmetallkatalysator in einer Menge, die zur Vernetzung und Härtung von (A1) und (A2) ausreichend ist, und
einen gehärteten Körper aus (B) einer Siliconkautschukzusammensetzung, enthaltend:
100 Gewichtsteile (B1) eines Diorganopolysiloxans, das mindestens zwei siliciumgebundene Alkenylgruppen enthält,
(B2) ein Organopolysiloxan, das mindestens zwei siliciumgebundene Wasserstoffatome in einer Menge enthält, sodass das Verhältnis der Molzahl von siliciumgebundenen Wasserstoffatomen von (B2) zu der Molzahl von Alkenylgruppen in (B1) innerhalb des Bereichs von 1,0 bis 20,0 liegt, und
(B3) einen Platingruppenmetallkatalysator oder ein organisches Peroxid in einer Menge, die zur Vernetzung und Härtung von (B1) und (B2) ausreichend ist.

2. Integral geformter Körper aus einem Siliconharz und einem Siliconkautschuk, umfassend:
einen gehärteten Körper aus (A) einer härtbaren Siliconharzzusammensetzung, enthaltend:
100 Gewichtsteile (A1) eines Organopolysiloxanharzes, das mindestens zwei siliciumgebundene Alkenylgruppen und nicht weniger als 30 Mol-% RSiO_{3/2}-Einheiten, bezogen auf die gesamten Siloxaneinheiten, enthält, worin R eine einbindige Kohlenwasserstoffgruppe mit 1 bis 6 Kohlenstoffatomen ist,
(A4) eine organische Verbindung des Nichtsilicon-Typs, die mindestens zwei Alkenylgruppen enthält, ein Molekulargewicht von nicht weniger als 150 aufweist und einen Brechungsindex innerhalb des Bereichs von 1,45 bis 1,56, gemessen bei 25 °C, aufweist, in einer Menge von 2 bis 40 Gewichtsteilen pro 100 Gewichtsteile (A1),
(A2) ein Organopolysiloxan mit einer Molekülstruktur zwischen verzweigt und harzartig, das siliciumgebundene Phenylgruppen und mindestens zwei siliciumgebundene Wasserstoffatome enthält, wobei (A2) in einer Menge vorhanden ist, sodass das Verhältnis der Molzahl von siliciumgebundenen Wasserstoffatomen von (A2) zu der Molzahl von Alkenylgruppen in (A1) und (A4) innerhalb des Bereichs von 0,4 bis 0,98 liegt, und
(A3) einen Platingruppenmetallkatalysator in einer Menge, die zur Vernetzung und Härtung von (A1), (A2) und (A4) ausreichend ist, und
einen gehärteten Körper aus (B) einer Siliconkautschukzusammensetzung, enthaltend:
100 Gewichtsteile (B1) eines Diorganopolysiloxans, das mindestens zwei siliciumgebundene Alkenylgruppen enthält,
(B2) ein Organopolysiloxan, das mindestens zwei siliciumgebundene Wasserstoffatome in einer Menge enthält, sodass das Verhältnis der Molzahl von siliciumgebundenen Wasserstoffatomen von (B2) zu der Molzahl von Alkenylgruppen in (B1) innerhalb des Bereichs von 1,0 bis 20,0 liegt, und
(B3) einen Platingruppenmetallkatalysator oder ein organisches Peroxid in einer Menge, die zur Vernetzung und Häutung von (B1) und (B2) ausreichend ist.

3. Integral geformter Körper aus einem Siliconharz und einem Siliconkautschuk gemäß Anspruch 1 oder Anspruch 2, wobei die Härte des gehärteten Körpers aus einer härtbaren Siliconzusammensetzung (A), die mit einem Typ-D-Durometer gemäß japanischem industriestandard K 7215 gemessen ist, innerhalb des Bereichs von 65 bis 80 liegt.

4. Integral geformter Körper aus einem Siliconharz und einem Siliconkautschuk nach einem der Ansprüche 1 bis 3, wobei die siliciumgebundenen organischen Gruppen, die in Komponente (A2) vorhanden sind, Methyl- und Phenylgruppen sind.

5. Integral geformter Körper aus einem Siliconharz und einem Siliconkautschuk nach einem der Ansprüche 1 bis 4, wobei (A2) ausgewählt ist aus der Gruppe von Organopolysiloxanen, die durch die folgende mittleren Molekularfiormein wiedergegeben sind:
(Me₂HSiO_{1/2})₆ (PhSiO_{3/2})₄
(Me₂HSiO_{1/2})₅ (PhSiO_{3/2})₅
(Me₂HSiO_{1/2})₄ (PhSiO_{3/2})₆
(Me₂HSiO_{1/2})₄ (MePhSiO_{3/2})₂ (SiO_{4/2})₂ und
(Me₂HSiO_{1/2})₆ (MePhSiO_{3/2})₂ (SiO_{4/2})₂.

6. Verfahren zur Herstellung eines integral geformten Körpers aus einem Siliconharz und einem Siliconkautschuk gemäß einem der Ansprüche 1 bis 5, umfassend die Schritte des Einfüllens einer härtbaren Siliconharzzusammensetzung (A) und einer Siliconkautschukzusammensetzung (B) in dieselbe Form und des gleichzeitigen Härtens und Formens von (A) und (B).

7. Verfahren zur Herstellung eines integral geformten Körpers aus einem Siliconharz und einem Siliconkautschuk gemäß einem der Ansprüche 1 bis 5, umfassend die Schritte des Einfüllens einer härtbaren Siliconharzzusammensetzung (A) in eine Form und des Härtens und Formens des Siliconharzes und dann des Einfüllens einer Siliconkautschukzusammensetzung (B) in dieselbe Form und des Härtens und Formens der Siliconkautschukzusammensetzung in derselben Form.

8. Verfahren gemäß Anspruch 7, wobei die Härte des gehärteten Körpers aus (A) einer härtbaren Siliconharzzusammensetzung, die in der Form gehärtet und geformt wird, innerhalb des Bereichs von 65 bis 80, gemessen mit einem Typ-D-Durometer gemäß japanischem Industriestandard K 7215, ist.

## Revendications

1. Corps intégralement moulé d'une résine silicone et de caoutchouc silicone comprenant : un corps durci de (A) une composition de résine silicone durcissable comprenant :
100 parties en poids de (A1) une résine organopolysiloxane qui contient au moins deux groupes alcényle liés au silicium, et pas moins de 30 pour cent en moles de motifs siloxane totaux de motifs RSiO_{3/2} où R est un groupe hydrocarboné monovalent ayant de 1 à 6 atomes de carbone,
(A2) un organopolysiloxane ayant une structure moléculaire entre branchée et résineuse qui contient des groupes phényle liés au silicium et au moins deux atomes d'hydrogène liés au silicium où (A2) est présent en une quantité telle que le rapport du nombre molaire d'atomes d'hydrogène liés au silicium de (A2) au nombre molaire de groupes alcényle dans (A1) est dans la plage de 0,4 à 0,98, et
(A3) un catalyseur de métal du groupe du platine en une quantité suffisante pour réticuler et durcir (A1) et (A2), et
un corps durci de (B) une composition de caoutchouc silicone comprenant :
100 parties en poids de (B1) un diorganopolysiloxane qui contient au moins deux groupes alcényle liés au silicium,
(B2) un organopolysiloxane qui contient au moins deux atomes d'hydrogène liés au silicium en une quantité telle que le rapport du nombre molaire d'atomes d'hydrogène liés au silicium de (B2) au nombre molaire de groupes alcényle dans (B1) est dans la plage de 1,0 à 20,0, et
(B3) un catalyseur de métal du groupe du platine ou un peroxyde organique en une quantité suffisante pour réticuler et durcir (B1) et (B2).

2. Corps intégralement moulé d'une résine silicone et un caoutchouc silicone comprenant : un corps durci de (A) une composition de résine silicone durcissable comprenant :
100 parties en poids de (A1) une résine organopolysiloxane qui contient au moins deux groupes alcényle liés au silicium, et pas moins de 30 pour cent en moles de motifs siloxane totaux de motifs RSiO_{3/2} où R est un groupe hydrocarboné monovalent ayant de 1 à 6 atomes de carbone, (A4) un composé organique de type non-silicone qui contient au moins deux groupes alcényle, ayant un poids moléculaire de pas moins de 150, et un indice de réfraction dans la plage de 1,45 à 1,56 mesuré à 25 °C en une quantité de 2 à 40 parties en poids pour 100 parties en poids de (A1),
(A2) un organopolysiloxane ayant une structure moléculaire entre branchée et résineuse qui contient des groupes phényle liés au silicium et au moins deux atomes d'hydrogène liés au silicium où (A2) est présent en une quantité telle que le rapport du nombre molaire d'atomes d'hydrogène liés au silicium de où (A2) est présent en une quantité telle que le rapport du nombre molaire d'atomes d'hydrogène liés au silicium de (A2) au nombre molaire de groupes alcényle dans (A1) et (A4) est dans la plage de 0,4 à 0,98, et
(A3) un catalyseur de métal du groupe du platine en une quantité suffisante pour réticuler et durcir (A1) (A2) et (A4), et
un corps durci de (B) une composition de caoutchouc silicone comprenant :
100 parties en poids de (B1) un diorganopolysiloxane qui contient au moins deux groupes alcényle liés au silicium,
(B2) un organopolysiloxane qui contient au moins deux atomes d'hydrogène liés au silicium en une quantité telle que le rapport du nombre molaire d'atomes d'hydrogène liés au silicium de (B2) au nombre molaire de groupes alcényle dans (B1) est dans la plage de 1,0 à 20,0, et
(B3) un catalyseur de métal du groupe du platine ou un peroxyde organique en une quantité suffisante pour réticuler et durcir (B1) et (B2).

3. Corps intégralement moulé d'une résine silicone et un caoutchouc silicone selon la revendication 1 ou la revendication 2 où la dureté du corps durci d'une composition de résine silicone durcissable (A) qui est mesurée avec un duromètre de type D conformément à la norme industrielle japonaise K 7215 est dans la plage de 65 à 80.

4. Corps intégralement moulé d'une résine silicone et un caoutchouc silicone de l'une quelconque des revendications 1 à 3 dans lequel les groupes organiques liés au silicium présents dans le composant (A2) sont des groupes méthyle et phényle.

5. Corps intégralement moulé d'une résine silicone et un caoutchouc silicone de l'une quelconque des revendications 1 à 4 dans lequel (A2) est choisi dans le groupe d'organopolysiloxanes représentés par les formules moléculaires moyennes suivantes :
(Me₂HSiO_{1/2})₆(PhSiO_{3/2})₄
(Me₂HSiO_{1/2})₅(PhSiO_{3/2})₅
(Me₂HSiO_{1/2})₄(PhSiO₃/₂)₆
(Me₂HSiO_{1/2})₄(PhSiO_{2/2})₂(SiO_{4/2})₂ et
(Me₂HSiO_{1/2})₆(PhSiO_{2/2})₂(SiO_{4/2})₂

6. Procédé pour fabriquer un corps intégralement moulé d'une résine silicone et un caoutchouc silicone selon l'une quelconque des revendications 1 à 5 comprenant les étapes consistant à charger une composition de résine silicone durcissable (A) et une composition de caoutchouc silicone (B) dans le même moule, et durcir et mouler simultanément (A) et (B).

7. Procédé de fabrication d'un corps intégralement moulé d'une résine silicone et un caoutchouc silicone selon l'une quelconque des revendications 1 à 5 comprenant les étapes consistant à charger une composition de résine silicone durcissable (A) dans un moule, et durcir et mouler la résine silicone ; et ensuite charger une composition de caoutchouc silicone (B) dans le même moule, et durcir et mouler la composition de caoutchouc silicone dans le même moule.

8. Procédé selon la revendication 7 dans lequel la dureté du corps durci de (A) une composition de résine silicone durcissable durcie et moulée dans le moule qui est mesurée avec un duromètre de type D conformément à la norme industrielle japonaise K 7215 est dans la plage de 65 à 80.
